# EUROPÄISCHE PATENTSCHRIFT

(11) **EP 4 560 173 B1**
(45) Veröffentlichungstag und Bekanntmachung des Hinweises auf die Patenterteilung: **08.10.2025**
(21) Anmeldenummer: 23212272.1
(22) Anmeldetag: 27.11.2023
(51) Int. Cl.: F16L 37/32, F16L 37/091

(54) **STECKKUPPLUNG**
PLUG-IN COUPLING
RACCORD ENFICHABLE

(43) Veröffentlichungstag der Anmeldung: 28.05.2025
(73) Patentinhaber: AVS, Ingenieur J.C. Römer GmbH, 94481 Grafenau (DE)
(72) Erfinder: HASELWARTER, Wolfgang, 94481 Grafenau (DE)
(74) Vertreter: Wolf, Gerhard

(56) Entgegenhaltungen:
- EP-B1- 2 712 413
- DE-A1- 102018 008 868
- DE-A1- 102018 121 440
- US-B2- 7 621 569

## Beschreibung

Die Erfindung betrifft eine Steckkupplung für fluidführende Anwendungen.

Steckkupplungen zum lösbaren Verbinden zweier Leitungsteile, insbesondere Schlauchteile, in denen eine Flüssigkeit geführt wird, sind grundsätzlich bekannt, beispielsweise aus der EP 1 644 656 B1. Sie weisen zumindest zwei Kupplungselemente auf, die lösbar miteinander verbunden werden können, um einen Fluidfluss zwischen den beiden Leitungsteilen zu ermöglichen. In den Kupplungselementen kann ein Ventilkörper verschiebbar geführt sein, um beim Entkoppeln der Steckkupplung die Kupplungselemente flüssigkeitsdicht zu verschließen.

Um die Kupplungselemente der Steckkupplung im gekoppelten Zustand relativ zueinander zu fixieren, weist das weibliche Kupplungselement bekannter Steckkupplungen einen federbelasteten Taster auf, der in radialer Richtung relativ zur Steckrichtung der Kupplungselemente betätigbar ist. Durch das radiale Eindrücken des Tasters wird ein Riegel, der mit einer umfangsseitig vorgesehenen Kontur des männlichen Kupplungselements im Eingriff steht, aus dieser Kontur herausbewegt, so dass die Kupplungselemente voneinander getrennt werden können.

Ein wesentlicher Nachteil bekannter Steckkupplungen besteht darin, dass diese relativ aufwändig zu fertigen und damit teuer sind. Darüber hinaus sind bekannte Steckkupplungen aufgrund des radial eindrückbaren Tasters relativ groß bauend und nehmen damit erheblichen Bauraum in den Gehäusen von technischen Geräten, beispielsweise Kaffeemaschinen, ein, in denen die Steckkupplungen verwendet werden.

Druckschrift DE 10 2018 008 868 A1 offenbart eine Schnellverschlusskupplung für Flüssigkeitsleitungen. Sie weist eine Muffe und einen in die Muffe einschiebbaren Stecker auf. Die Muffe umfasst einen Verriegelungs- und Entriegelungsmechanismus, der einen Krallensperrkranz und eine Krallensperrkranzentriegelung aufweist.

Ausgehend hiervon ist es Aufgabe der Erfindung, eine Steckkupplung anzugeben, die relativ einfach zu fertigen und damit günstig in der Herstellung ist und darüber hinaus eine geringe Baugröße aufweist.

Die Aufgabe wird durch eine Steckkupplung mit den Merkmalen des unabhängigen Patentanspruchs 1 gelöst. Bevorzugte Ausführungsformen sind Gegenstand der Unteransprüche.

Gemäß einem Aspekt bezieht sich die Erfindung auf eine Steckkupplung. Die Steckkupplung umfasst zumindest ein erstes Kupplungselement als männliches Kupplungselement und ein zweites Kupplungselement als weibliches Kupplungselement, auch als Kupplungsdose bezeichnet. Das erste Kupplungselement umfasst einen ersten Ventilkörper und ein erstes Kupplungselementgehäuse. Der erste Ventilkörper ist federbelastet verschiebbar im ersten Kupplungselementgehäuse angeordnet und liegt im entkoppelten Zustand der Steckkupplung aufgrund der Federbelastung gegenüber einem im ersten Kupplungselementgehäuse vorgesehenen Dichtsitz an. Das zweite Kupplungselement weist ein zweites Kupplungselementgehäuse mit einer Öffnung auf, in die das erste Kupplungselement teilweise einsteckbar ist. Die Öffnung des zweiten Kupplungselements weist einen Steckeinsatz zur zerstörungsfrei lösbaren Fixierung des ersten Kupplungselements im zweiten Kupplungselementgehäuse auf. Der Steckeinsatz umfasst eine Steckhülse, ein Fixierelement und ein Löseorgan mit einer Einführöffnung. Das Fixierelement ist zur lösbaren Fixierung des in die Einführöffnung eingeschobenen ersten Kupplungselements in dem Steckeinsatz ausgebildet. Das Löseorgan wirkt mit dem Fixierelement derart zusammen, dass durch eine axiale Verschiebung des Löseorgans relativ zur Steckhülse die Fixierung des ersten Kupplungselements gelöst wird.

Der technische Vorteil der Steckkupplung besteht darin, dass durch die Verwendung eines Steckeinsatzes, der in die Öffnung des zweiten Kupplungselements eingebracht ist und ein axial verschiebbares Löseorgan aufweist, eine kostengünstige Steckkupplung mit einer reduzierten Baugröße geschaffen werden kann. Der Erfindung liegt dabei die Erkenntnis zu Grunde, dass mit einem derartigen Steckeinsatz auch das männliche Kupplungselement einer Steckkupplung sicher im weiblichen Kupplungselement gehalten werden kann, und zwar trotz der Tatsache, dass das Kupplungselementgehäuse des männlichen Kupplungselements aus einem harten Material, beispielsweise aus einem ausgehärteten Kunststoff, gebildet ist.

Gemäß einem Ausführungsbeispiel weist das zweite Kupplungselement einen zweiten Ventilkörper auf, der federbelastet verschiebbar im zweiten Kupplungselementgehäuse angeordnet ist und sich im entkoppelten Zustand der Steckkupplung aufgrund der Federbelastung in einer Dichtlage befindet. Im gekoppelten Zustand hingegen sind der erste und zweite Ventilkörper durch Zusammenwirken der Kupplungselemente aus der Dichtlage bewegt. Dadurch wird erreicht, dass sowohl das männliche als auch das weibliche Kupplungselement nach dem Entkoppeln fluiddicht verschlossen werden und damit ein Auslaufen des Fluids unterbunden wird.

Gemäß einem Ausführungsbeispiel weist das zweite Kupplungselementgehäuse zumindest eine weitere Öffnung auf, in der ein weiterer Steckeinsatz zur Fixierung eines weiteren ersten Kupplungselements vorgesehen ist. Der weitere Steckeinsatz umfasst ebenfalls eine Steckhülse, ein Fixierelement und ein Löseorgan mit einer Einführöffnung. Das Fixierelement des weiteren Steckeinsatzes ist zur lösbaren Fixierung des weiteren, ersten Kupplungselements in dem weiteren Steckeinsatz ausgebildet und das Löseorgan wirkt mit dem Fixierelement derart zusammen, dass durch eine axiale Verschiebung des Löseorgans relativ zur Steckhülse die Fixierung des weiteren ersten Kupplungselements gelöst wird. Damit können durch ein Paar von Steckeinsätzen, die insbesondere einander gegenüberliegend vorgesehen sind, zwei männliche Kupplungselemente miteinander mittels eines weiblichen Kupplungselements verbunden werden. Das weibliche Kupplungselement weist dabei vorzugsweise keinen Ventilkörper auf. Beim Koppeln der Steckkupplung wirken vorzugsweise die Ventilkörper der beiden männlichen Kupplungselemente miteinander derart zusammen, dass diese von ihrem Dichtsitz abgehoben werden und damit der Fluidkanal durch die Steckkupplung freigegeben ist.

Gemäß einem Ausführungsbeispiel ist das Löseorgan in dem Steckeinsatz parallel, insbesondere achsgleich zur Einsteckrichtung des ersten Kupplungselements verschiebbar. Damit kann das zweite Kupplungselement eine geringere Baugröße aufweisen, da kein Bauraum für einen in radialer Richtung (radial in Bezug auf die Einsteckrichtung) betätigbaren Taster benötigt wird.

Gemäß einem Ausführungsbeispiel ist in der Öffnung des zweiten Kupplungselements ein Dichtelement vorgesehen, das durch den Steckeinsatz fixiert ist. Das Dichtelement ist zur Abdichtung des Übergangs zwischen dem ersten und zweiten Kupplungselement durch außenumfangsseitiges Umschließen des ersten Kupplungselements ausgebildet. Damit wird zum einen eine einfache Montage ermöglicht, zum anderen ist das Dichtelement innenliegend in dem weiblichen Kupplungselement vorgesehen, so dass die Gefahr der Verletzung eines am ersten Kupplungselement vorgesehenen, im entkoppelten Zustand außenliegenden Dichtelements nicht gegeben ist.

Gemäß einem Ausführungsbeispiel ist das Fixierelement ein scheibenförmiger Krallenring mit einer Innenöffnung, an der innenumfangsseitig eine Vielzahl von reversibel verbiegbaren Krallen zur Fixierung des ersten Kupplungselements vorgesehen sind. Der Krallenring umfasst dabei das erste Kupplungselement umfangsseitig und ermöglicht eine umfangsseitige Fixierung an einer Vielzahl von vorzugsweise gleichverteilt angeordneten Fixierpunkten, was eine stabile Verbindung zwischen dem ersten und zweiten Kupplungselement schafft.

Gemäß einem Ausführungsbeispiel umfasst die Steckhülse einen Hülsenabschnitt, der aus zumindest einem Wandungselement gebildet ist. Das Wandungselement ist durch Stanzen und Biegen eines metallischen Flachmaterialabschnitts zu einem schalenartigen oder umfangsseitig geschlossenen Element gebildet. Das Fixierelement ist von dem Hülsenabschnitt umschlossen und formschlüssig in dem Hülsenabschnitt fixiert. Durch die Herstellung der Steckhülse aus einem metallischen Flachmaterialabschnitt in Stanz-Biegetechnik wird eine kostengünstige Herstellung des Steckeinsatzes ermöglicht, da die Steckhülse nicht mittels spanender Bearbeitung hergestellt werden muss.

Gemäß einem Ausführungsbeispiel ist das Fixierelement randseitig in einer Sicke des Hülsenabschnitts der Steckhülse, die in Stanz-Biegetechnik hergestellt ist, fixiert oder mittels eines Schnappmechanismus durch axiales Eindrücken in einer in Stanz-Biegetechnik hergestellten Steckhülse gehalten. Damit kann das Fixierelement sicher in der Steckhülse gehalten werden, und zwar ohne, dass die Steckhülse in Einsteckrichtung mehrteilig aufgebaut sein muss, um das Fixierelement zwischen zwei Teilen der Steckhülse halten zu können.

Gemäß einem Ausführungsbeispiel ist der Hülsenabschnitt zwischen einem Mittenbereich, in dem das Fixierelement gehalten ist, und einem dem Löseorgan gegenüberliegenden zweiten freien Ende der Steckhülse trichterförmig zulaufend ausgebildet. Dadurch verjüngt sich der Hülsenabschnitt zum zweiten freien Ende hin, um dort eine Anlagefläche für ein Dichtelement ausbilden zu können. Zudem kann durch das trichterförmige Zulaufen des Hülsenabschnitts eine laterale Führung für das erste Kupplungselement erreicht werden, um dieses zentriert in das Dichtelement einführen zu können.

Gemäß einem Ausführungsbeispiel weist der Hülsenabschnitt an einem der Einschuböffnung gegenüberliegenden zweiten freien Ende der Steckhülse einen Flansch zur Ausbildung einer Anlagefläche für das Dichtelement auf. Der Flansch kann durch einen radial nach außen gebogenen, planaren Abschnitt des Flachmaterials gebildet werden, aus dem die Steckhülse geformt ist. Damit kann die Anlagefläche, die das Dichtelement in Position hält, vergrößert werden.

Gemäß einem Ausführungsbeispiel weist der Hülsenabschnitt an einem dem Löseorgan gegenüberliegenden zweiten freien Ende einen Flansch auf, an dem umfangsseitig verteilt mehrere Krallen zur Fixierung der Steckhülse in dem zweiten Kupplungselementgehäuse vorgesehen sind. Vorzugsweise ist der Flansch segmentiert ausgebildet und zwischen zwei aufeinanderfolgenden Flanschsegmenten ist jeweils eine Kralle vorgesehen. Durch die Anordnung der Krallen im Bereich des Flansches kann die Bauhöhe des Steckeinsatzes reduziert werden. Zudem ermöglicht die Verwendung von Krallen ein Eindrücken des Steckeinsatzes mit geringerem Kraftaufwand im Vergleich zu einem durch Pressfügen einzubringenden Steckeinsatz.

Gemäß einem Ausführungsbeispiel ist die Steckhülse aus zumindest zwei in Umfangsrichtung aneinander anschließenden Steckhülsenelementen gebildet und durch die aneinander anschließenden Steckhülsenelemente zu einer geschlossenen, im Querschnitt kreisringförmigen Steckhülse zusammensetzbar. Die Steckhülsenelemente sind aus Kunststoff gebildet. Die Steckhülse weist in deren Innenraum eine Sicke auf, in der das Fixierelement im zusammengesetzten Zustand der Steckhülse formschlüssig fixiert ist. Durch die Segmentierung der Steckhülse in Umfangsrichtung wird die Möglichkeit eröffnet, in ein Steckhülsenelement zunächst das Fixierelement einzusetzen und anschließend dann durch Aufsetzen zumindest eines weiteren Steckhülsenelements die Steckhülse umfangsseitig zu schließen, so dass der umfangsseitig geschlossene Steckeinsatz in das zweite Kupplungselement einbringbar ist. Die Herstellung der Steckhülsenelemente aus Kunststoff ermöglicht eine im Vergleich zu einer metallischen Steckhülse günstige Herstellung. Ein weiterer Vorteil des Steckeinsatzes besteht darin, dass das Löseorgan nicht in die Steckhülse eingepresst werden muss, sondern sich aufgrund der Mehrteiligkeit der Steckhülse vor dem Zusammensetzen in diese einbringen lässt. Dadurch kann die Bildung von Spänen, die durch Abschabungen beim Einpressen entstehen können, verhindert werden.

Gemäß einem Ausführungsbeispiel sind die Steckhülsenelemente durch Verbindungsmittel im zusammengesetzten Zustand derart relativ zueinander fixierbar, dass diese im Zusammenwirken miteinander die umfangsseitig geschlossene Steckhülse bilden. Durch die Verbindungsmittel werden die Steckhülsenelemente nach dem Zusammensetzen gegeneinander lagemäßig fixiert, so dass die Steckhülse, die durch das Zusammensetzen der Steckhülsenelemente entsteht, gegen ein unerwünschtes Auseinanderfallen gesichert ist.

Gemäß einem Ausführungsbeispiel umfassen die Verbindungsmittel zumindest eine Zapfenverbindung und/oder zumindest eine Rastverbindung. Die Verbindungsmittel können beispielsweise an den Fügeflächen vorgesehen sein, die beim Zusammensetzen der Steckhülsenelemente gegeneinander zur Anlage gelangen. Dadurch kann eine einfach herstellbare aber sichere Verbindung zwischen den Steckhülsenelementen geschaffen werden.

Gemäß einem Ausführungsbeispiel ist die Steckhülse in Umfangsrichtung segmentiert und in axialer Richtung nicht segmentiert. In anderen Worten wird durch die Steckhülsenelemente jeweils ein Abschnitt der Steckhülse gebildet, der in Umfangsrichtung gesehen einen Winkelsektor der Steckhülse bildet. In axialer Richtung, d.h. in der Richtung, in der das Einschieben des ersten Kupplungselements in die Steckhülse erfolgt, erstreckt sich das Steckhülsenelement über die gesamte Länge der Steckhülse, d.h. in axialer Richtung ist die Steckhülse nicht mehrteilig ausgebildet.

Gemäß einem Ausführungsbeispiel sind die Steckhülsenelemente identisch ausgebildete Teile. Dadurch wird die Herstellung der Steckhülse vereinfacht, da mehr Gleichteile bestehen und beim Zusammenstellen der Teile des Steckeinsatzes nicht zwischen unterschiedlich geformten Steckhülsenelementen unterschieden werden muss.

Gemäß einem Ausführungsbeispiel bildet die Steckhülse zudem im zusammengesetzten Zustand eine Gleitführung für die axiale Verschiebung des Löseorgans, d.h. die Außenwandung des Löseorgans liegt beispielsweise zumindest partiell an der Innenwandung der Steckhülse an, so dass durch die Steckhülse eine geführte Verschiebbarkeit des Löseorgans ermöglicht wird.

Unter "Ventilkörper" im Sinne der vorliegenden Offenbarung kann ein Ventilstößel oder eine Hülse verstanden werden. Ein Ventilstößel bildet dabei einen außenseitig umflossenen Ventilkörper, ein als Hülse ausgebildeter Ventilkörper weist eine Innenöffnung auf, die im gekoppelten Zustand der Steckkupplung von dem Fluid durchflossen ist. Die Ausdrücke "näherungsweise", im Wesentlichen" oder "etwa" bedeuten im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand mehrerer Figuren an Ausführungsbeispielen näher erläutert. Es zeigen:
- Fig. 1: beispielhaft einen Längsschnitt durch eine erste**,** nicht erfindungsgemäße, Ausführungsform einer Steckkupplung entlang einer Mittellängsachse, wobei sich das erste und zweite Kupplungselement in einem entkoppelten Zustand befinden, bei dem das erste Kupplungselement aus dem zweiten Kupplungselement herausgezogen ist und sich das erste und zweite Ventilkörper in Dichtlage befinden;
- Fig. 2: beispielhaft einen Längsschnitt durch die Steckkupplung gemäß Fig. 1 entlang der Mittellängsachse, wobei sich das erste und zweite Kupplungselement im gekoppelten Zustand befinden, bei dem der erste und zweite Ventilkörper derart zusammenwirken, dass diese vom Dichtsitz abgehoben sind;
- Fig. 3: beispielhaft einen Längsschnitt durch eine zweite, erfindungsgemäße, Ausführungsform einer Steckkupplung entlang einer Mittellängsachse, wobei die Steckkupplung zwei erste Kupplungselemente und ein zweites Kupplungselement aufweist, die sich in einem entkoppelten Zustand befinden.
- Fig. 4: beispielhaft einen Längsschnitt durch die zweite Ausführungsform der Steckkupplung gemäß Fig. 3, wobei ein erstes Kupplungselement in das zweite Kupplungselement eingeschoben und mit diesem gekoppelt ist, das weitere erste Kupplungselement jedoch noch von dem zweiten Kupplungselement entkoppelt ist;
- Fig. 5: beispielhaft einen Längsschnitt durch die zweite Ausführungsform der Steckkupplung gemäß Fig. 3 und 4, wobei die beiden ersten Kupplungselemente in das zweite Kupplungselement eingeschoben und mit diesem gekoppelt sind;
- Fig. 6: beispielhaft eine Schnittdarstellung eines Steckeinsatzes, wobei u.a. der Hülsenabschnitt der Steckhülse mittels Stanz-Biegetechnik aus einem metallischen Flachmaterial gefertigt ist;
- Fig. 7: beispielhaft eine Explosions- und Schnittdarstellung des Steckeinsatzes gemäß Fig. 6, dessen Hülsenabschnitt in Umfangsrichtung segmentiert und aus mehreren Wandungselementen zusammengesetzt ist;
- Fig. 8: beispielhaft und in einer perspektivischen Ansicht ein weiteres Ausführungsbeispiel eines Steckeinsatzes umfassend zwei Steckhülsenelemente in einer teilweisen Explosionsdarstellung; und
- Fig. 9: beispielhaft eine Längsschnittdarstellung des Steckeinsatzes gemäß Fig. 8.

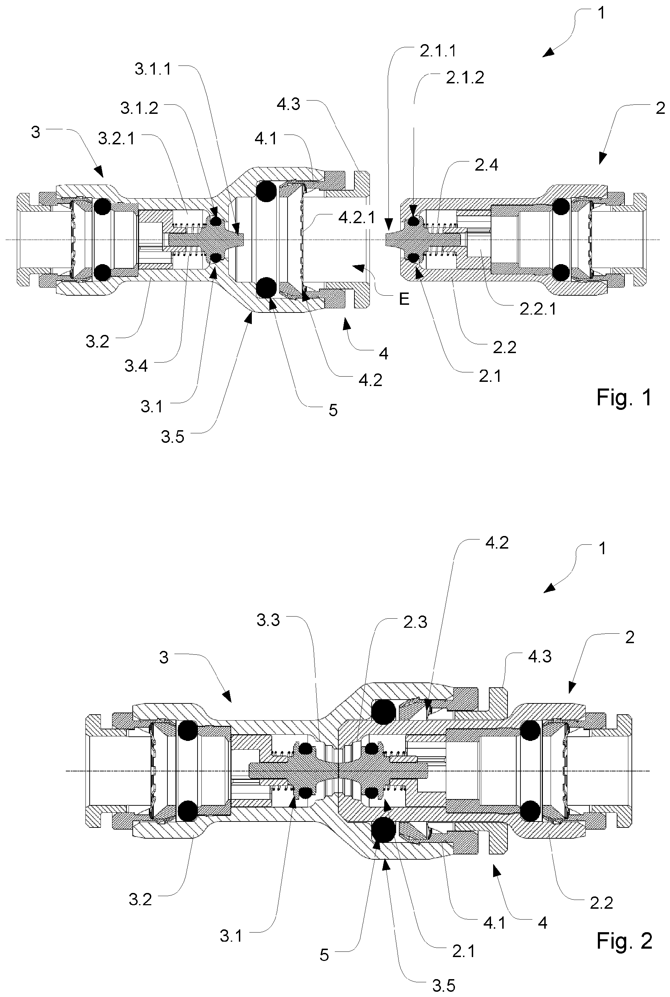

Fig. 1 und 2 zeigen jeweils Schnittdarstellungen einer Steckkupplung 1 in unterschiedlichen Kopplungszuständen, wobei Fig.1 den entkoppelten Zustand und Fig. 2 den gekoppelten Zustand zeigen.

Die Steckkupplung 1 ist dazu ausgebildet, eine flüssigkeitsdichte, lösbare Verbindung zwischen den Enden zweier Schlauch- oder Rohrstücke herzustellen.

Die Steckkupplung 1 umfasst ein erstes Kupplungselement 2 und ein zweites Kupplungselement 3. Das erste Kupplungselement 2 ist als männliches Kupplungselement ausgebildet, das zweite Kupplungselement als weibliches Kupplungselement.

Das erste Kupplungselement 2 weist einen ersten Ventilkörper 2.1, der als Ventilstößel ausgebildet ist, und ein erstes Kupplungselementgehäuse 2.2 auf. Der erste Ventilkörper 2.1 weist ein Dichtelement 2.1.2, insbesondere einen Dichtring, auf. Der erste Ventilkörper 2.1 ist axial verschiebbar in dem ersten Kupplungselementgehäuse 2.2 vorgesehen. Er wird im entkoppelten Zustand der Steckkupplung 1 durch eine Feder 2.4 in einer ersten Position gehalten, in der der erste Ventilkörper 2.1 in Dichtlage gegenüber einem im ersten Kupplungselementgehäuse 2.2 ausgebildeten Ventilsitz bzw. Dichtsitz 2.3 anliegt.

In dem ersten Kupplungselementgehäuse 2.2 ist ein Fluidkanal 2.2.1 ausgebildet, der mittels des ersten Ventilkörpers 2.1 verschlossen ist, wenn der erste Ventilkörper 2.1 auf dem Ventilsitz bzw. Dichtsitz 2.3 anliegt. Wenn sich der erste Ventilkörper 2.1 entgegen der Federkraft in einer geöffneten Position befindet, d.h. vom Dichtsitz 2.3 abgehoben ist, ist der Fluidkanal 2.2.1 geöffnet, so dass das Fluid durch das erste Kupplungselementgehäuse 2.2 strömen kann.

Das erste Kupplungselementgehäuse 2.2 kann an dem freien Ende, das dem Ventilsitz bzw. Dichtsitz 2.3 gegenüberliegt, dazu eingerichtet sein, eine Schlauchkupplung aufzunehmen oder eine solche Schlauchkupplung aufweisen. Die Schlauchkupplung kann beispielsweise durch einen Steckeinsatz 4 gebildet werden, der nachfolgend noch näher beschrieben wird.

In analoger Weise weist das zweite Kupplungselement 3 einen zweiten Ventilkörper 3.1, der als Ventilstößel ausgebildet ist, und ein zweites Kupplungselementgehäuse 3.2 auf. Der zweite Ventilkörper 3.1 weist ein Dichtelement 3.1.2, insbesondere einen Dichtring auf. Der zweite Ventilkörper 3.1 ist axial verschiebbar in dem zweiten Kupplungselementgehäuse 3.2 vorgesehen. Er wird im entkoppelten Zustand der Steckkupplung 1 durch eine Feder 3.4 in einer ersten Position gehalten, in der der zweite Ventilkörper 3.1 in Dichtlage gegenüber einem im zweiten Kupplungselementgehäuse 3.2 ausgebildeten Ventilsitz bzw. Dichtsitz 3.3 anliegt.

In dem zweiten Kupplungselementgehäuse 3.2 ist ein Fluidkanal 3.2.1 ausgebildet, der mittels des zweiten Ventilkörpers 3.1 verschlossen ist, wenn der zweite Ventilkörper 3.1 auf dem Ventilsitz bzw. Dichtsitz 3.3 anliegt. Wenn sich der zweite Ventilkörper 3.1 entgegen der Federkraft in einer geöffneten Position befindet, d.h. vom Dichtsitz 3.3 abgehoben ist, ist der Fluidkanal 3.2.1 geöffnet, so dass das Fluid durch das zweite Kupplungselementgehäuse 3.2 strömen kann.

Das zweite Kupplungselementgehäuse 3.2 kann an dem freien Ende, das dem Ventilsitz bzw. Dichtsitz 3.3 gegenüberliegt, dazu eingerichtet sein, eine Schlauchkupplung aufzunehmen oder eine solche Schlauchkupplung aufweisen. Die Schlauchkupplung kann beispielsweise durch einen Steckeinsatz 4 gebildet werden, der nachfolgend noch näher beschrieben wird.

Am zweiten Kupplungselement 3 ist ein Kopplungsabschnitt 3.5 mit einem Aufnahmeraum und einer Öffnung vorgesehen, wobei sich das erste Kupplungselement 2 in den Kopplungsabschnitt 3.5 teilweise einführen lässt. Um das erste Kupplungselement 2 in dem zweiten Kupplungselement 3 nach dem Einschieben zu fixieren, ist ein Steckeinsatz 4 vorgesehen, der nachfolgend noch näher beschrieben wird.

Beim Einführen des ersten Kupplungselements 2 in das zweite Kupplungselement gelangen die Stirnabschnitte 2.1.1, 3.1.1 des ersten und zweiten Ventilkörpers 2.1, 3.1, die an den freien Enden der Ventilkörper 2.1, 3.1 vorgesehen sind, gegeneinander zur Anlage. Bei der Einschiebebewegung üben diese aufeinander eine entgegen der Federkraft der Federn 2.4, 3.4 gerichtete Kraft aus, so dass die ersten und zweiten Ventilkörper 2.1, 3.1 von deren Dichtsitz abgehoben werden und jeweils den Fluidkanal 2.2.1, 3.2.1 freigeben. Durch die Ventilkörper 2.1, 3.1 wird damit erreicht, dass im gekoppelten Zustand der Steckkupplung 1 die Flüssigkeit durch die Steckkupplung 1 fließen kann und im entkoppelten Zustand die Fluidkanäle 2.2.1, 3.2.1 der Kupplungselemente 2, 3 durch die Ventilkörper 2.1, 3.1 fluiddicht verschlossen sind.

Die Stirnabschnitte 2.1.1, 3.1.1 können kegelstumpfartig ausgebildet sein und sich zum freien Ende hin verjüngen, um den Strömungswiderstand der Steckkupplung 1 zu verbessern.

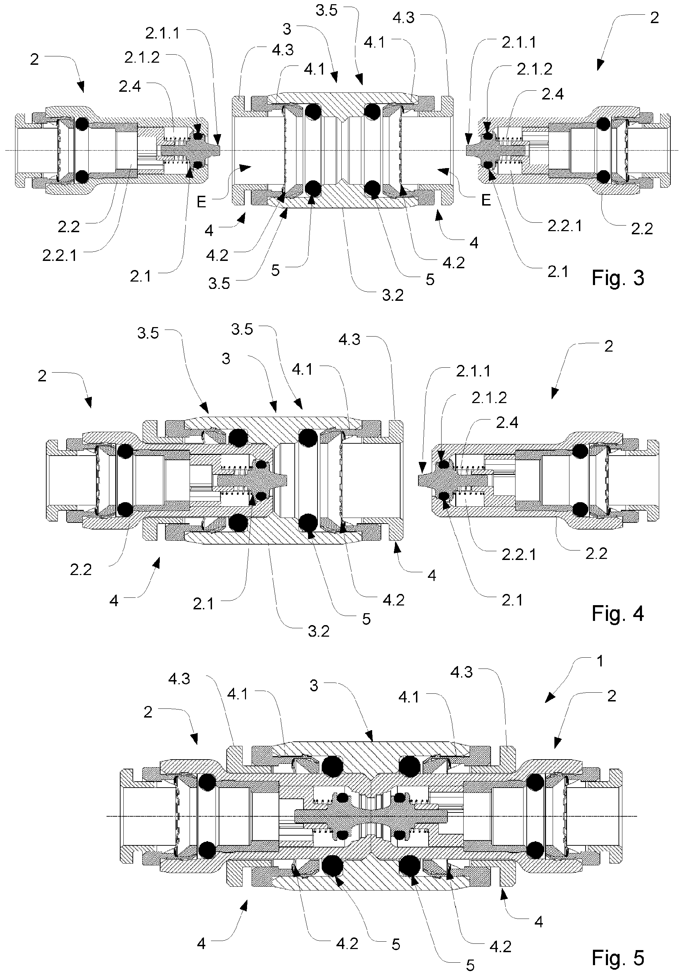

Fig. 3 bis 5 zeigen eine zweite Ausführungsform der Steckkupplung 1 in unterschiedlichen Kopplungszuständen.

Nachfolgend werden lediglich die Unterschiede zu der zuvor beschriebenen ersten Ausführungsform beschrieben. Im Übrigen gelten die vorherigen Ausführungen auch für die zweite Ausführungsform.

Der wesentliche Unterschied der zweiten Ausführungsform zur ersten Ausführungsform besteht darin, dass das zweite Kupplungselement 3 lediglich als im Wesentlichen rohrförmiges Kopplungsstück ausgebildet ist, das auf zwei einander gegenüberliegenden Seiten jeweils einen Kopplungsabschnitt 3.5 aufweist, in den jeweils ein erstes Kupplungselement 2 teilweise eingeschoben und nach dem Einschieben fixiert werden kann. Das zweite Kupplungselement 3 selbst weist dabei keinen Ventilkörper auf, sondert bildet lediglich eine Aufnahme für zumindest zwei erste Kupplungselemente 2, die jeweils, wie zuvor beschrieben, einen ersten Ventilkörper 2.1 aufweisen.

Wie in Fig. 5 erkennbar, wirken die ersten Kupplungselemente 2 derart miteinander zusammen, dass die ersten Ventilkörper 2.1 jeweils von deren Dichtsitz 2.3 abgehoben werden und damit den Fluidkanal 2.2.1 freigeben. Insbesondere gelangen die Stirnabschnitte 2.1.1, die an den freien Enden der Ventilkörper 2.1 vorgesehen sind, gegeneinander zur Anlage. Bei der Einschiebebewegung üben diese aufeinander eine entgegen der Federkraft der Federn 2.4 gerichtete Kraft aus, so dass die Ventilkörper 2.1 von deren Dichtsitz 2.3 abgehoben werden und jeweils den Fluidkanal 2.2.1 freigeben.

Bei beiden vorbeschriebenen Ausführungsformen ist die Fixierung des zumindest einen ersten Kupplungselements 2 in dem zweiten Kupplungselement 3 durch einen Steckeinsatz 4 realisiert. Der Steckeinsatz 4 ist dabei in die Öffnung des Kopplungsabschnitts 3.5, in die auch das erste Kupplungselement 2 einzuschieben ist, eingebracht. Der Steckeinsatz 4 umgibt dabei den in den Kopplungsabschnitt 3.5 eingeschobenen Teil des ersten Kupplungselement 2 und fixiert damit das erste Kupplungselement 2 nicht nur punktuell an einer Stelle, sondern umfangsseitig gleichmäßig verteilt an einer Vielzahl von Fixierstellen. Dadurch wird eine sichere Fixierung erreicht, so dass der gekoppelte Zustand der Steckkupplung 1 auch bei hohem Druck erhalten bleibt.

Wie zuvor ausgeführt, dient der Steckeinsatz 4 der lösbaren Fixierung des ersten Kupplungselements 2 in dem zweiten Kupplungselement 3. Damit bildet der Steckeinsatz 4 ein Kopplungsstück zwischen dem ersten Kupplungselement 2 und dem zweiten Kupplungselement 3.

Im Inneren des Steckeinsatzes 4 ist ein Aufnahmeraum ausgebildet, in den das freie Ende des ersten Kupplungselements 2 einfügbar und fixierbar ist, so dass durch die Fixierung des Steckeinsatzes 4 im zweiten Kupplungselement 3 und die Fixierung des ersten Kupplungselements 2 in dem Steckeinsatz 4 das erste Kupplungselement 2 im zweiten Kupplungselement 3 lösbar gehalten wird. Zur Abdichtung des Übergangs zwischen dem ersten Kupplungselement 2 und dem zweiten Kupplungselement 3 ist im Aufnahmeraum des Kopplungsabschnitts 3.5 ein Dichtelement 5 vorgesehen. Das Dichtelement 5 kann, wie in den Fig. 1 bis 5 gezeigt, als ein O-Ring ausgebildet sein. Alternativ ist es möglich, dass das Dichtelement 5 als Elastomer-Formteil ausgebildet ist.

Der Steckeinsatz 4 umfasst eine Steckhülse 4.1, ein Fixierelement 4.2 und ein Löseorgan 4.3. Die Steckhülse 4.1 ist hohlkörperartig ausgebildet und bildet zumindest abschnittsweise die umfangsseitige Wandung des Steckeinsatzes 4 aus. Die Steckhülse 4.1 weist an einem ersten freien Ende eine Einführöffnung auf, in der das Löseorgan 4.3 axial verschiebbar im Steckeinsatz 4 geführt ist. An die Einführöffnung anschließend ist im Inneren der Steckhülse 4.1 ein Durchführkanal gebildet, in den das erste Kupplungselement 2 einschiebbar ist. Die Steckhülse 4.1 kann mehrteilig ausgeführt sein.

Im Inneren der Steckhülse 4.1 ist das Fixierelement 4.2 aufgenommen. Das Fixierelement 4.2 ist dazu ausgebildet, das erste Kupplungselement 2 in axialer Richtung im Steckeinsatz 4 zu verankern. Im gezeigten Ausführungsbeispiel ist das Fixierelement 4.2 ein ringartiges Element. Außenumfangsseitig ist das Fixierelement 4.2 in der Steckhülse 4.1 durch einen Formschluss fixiert. In der gezeigten Ausführungsform taucht der außenumfangsseitig vorgesehene Randbereich des Fixierelements 4.2 in eine innenumfangsseitig vorgesehene Sicke der Steckhülse 4.1 ein, wodurch das Fixierelement 4.2 in axialer Richtung in der Steckhülse 4.1 gehalten ist. Alternativ ist auch eine verrastende Fixierung des Fixierelements in der Steckhülse 4.1 möglich.

Das Fixierelement 4.2 weist am innenliegenden Rand mehrere Krallen 4.2.1 auf. In anderen Worten ist das Fixierelement 4.2 als Krallenring ausgebildet. Die Krallen 4.2.1 sind um eine Durchführöffnung des Fixierelements 4.2 herum angeordnet. Der Durchmesser der Durchführöffnung ist kleiner als der Außendurchmesser des Abschnitts des ersten Kupplungselements 2, der in das zweite Kupplungselement 3 eingeschoben wird, so dass die Krallen 4.2.1 beim Einschieben des ersten Kupplungselements 2 in Einführrichtung verformt werden und nach Erreichen einer finalen Einschubposition in die Wandung des ersten Kupplungselements 2 eingreifen. Dadurch bewirkt das Fixierelement 4.2, dass sich das erste Kupplungselement 2 nicht in unerwünschter Weise aus dem Steckeinsatz 4 und damit aus dem zweiten Kupplungselement 3 herauslösen kann.

Das Löseorgan 4.3 ist dazu ausgebildet, das Eingreifen der Krallen 4.2.1 des Fixierelements 4.2 in das erste Kupplungselement 2 zu lösen, so dass das erste Kupplungselement 2 wieder aus dem Steckeinsatz 4 und damit aus dem zweiten Kupplungselement 3 herausgezogen werden kann. Das Löseorgan 4.3 ist vorzugsweise hülsenförmig ausgebildet und weist eine Einschuböffnung E und im Inneren einen Durchführkanal auf, durch den das erste Kupplungselement 2 hindurchschiebbar ist.

Das Löseorgan 4.3 ist über die Einführöffnung in die Steckhülse 4.1 eingeschoben. Das in der Steckhülse 4.1 liegende freie Ende des Löseorgans 4.3 ist zum Zusammenwirken mit den Krallen 4.2.1 des Fixierelements 4.2 ausgebildet, und zwar derart, dass das freie Ende des Löseorgans 4.3 beim axialen Einschieben des Löseorgans 4.3 die Krallen 4.2.1 in Einschieberichtung nach unten drückt und dadurch das Eingreifen der Krallen 4.2.1 in die Wandung des ersten Kupplungselements 2 aufgehoben wird.

Das Löseorgan 4.3 ist in Einschubrichtung des ersten Kupplungselements 2 im Steckeinsatz 4 verschiebbar, um die Krallen 4.2.1 aufzuweiten und dadurch die durch das Fixierelement 4.2 bewirkte Fixierung des ersten Kupplungselements 2 aufzuheben.

Die Verwendung eines derartigen Steckeinsatzes 4 zur lösbaren Kopplung des ersten und zweiten Kupplungselements 2, 3 ermöglicht eine sichere Fixierung der Steckkupplung 1 im gekoppelten Zustand und dabei gleichzeitig eine deutliche Reduzierung der Baugröße im Vergleich zu Steckkupplungen, bei denen ein radial verschiebbarer Taster zur Sicherung des gekoppelten Zustands vorgesehen ist. Zudem können Steckeinsätze 4 in hoher Stückzahl automatisiert hergestellt werden, so dass die Kosten für die Steckkupplung reduziert werden. Zudem kann das zweite Kupplungselement 3 im Bereich des Kopplungsabschnitts 3.5 rotationssymmetrisch oder im Wesentlichen rotationssymmetrisch ausgebildet sein. Dadurch ergibt sich ein geringerer Verzug beim Gießen des beispielsweise aus Kunststoff gefertigten zweiten Kupplungselements 3

Gemäß einer ersten Ausführungsform ist der Steckeinsatz 4 beispielsweise wie in der anmeldereigenen Druckschrift DE 10 2018 121 440 A1 beschrieben ausgebildet. Der Inhalt dieser Druckschrift wird vollumfänglich zum Gegenstand der vorliegenden Offenbarung gemacht, soweit sich dieser auf die Ausbildung des Steckeinsatzes bezieht. Der Steckeinsatz ist dabei in dieser Druckschrift als Fixierungsmittel oder auch Klemmeinrichtung bezeichnet. Die in den Figuren 1 bis 5 gezeigten Steckeinsätze 4 sind beispielsweise gemäß der Lehre der Druckschrift DE 10 2018 121 440 A1 ausgebildet.

Bei dieser ersten Ausführungsform ist die Steckhülse 4.1 in Einschubrichtung gesehen zweigeteilt ausgebildet, und zwar aus einem Hülsenabschnitt und einem Stützring. Das Fixierelement 4.2 wird zwischen einer Schulter des Hülsenabschnitts und dem Stützring gehalten. Der Stützring bildet das dem Löseorgan 4.3 abgewandte freie Ende der Steckhülse 4.1 und damit eine ringförmige Anlagefläche für das Dichtelement 5.

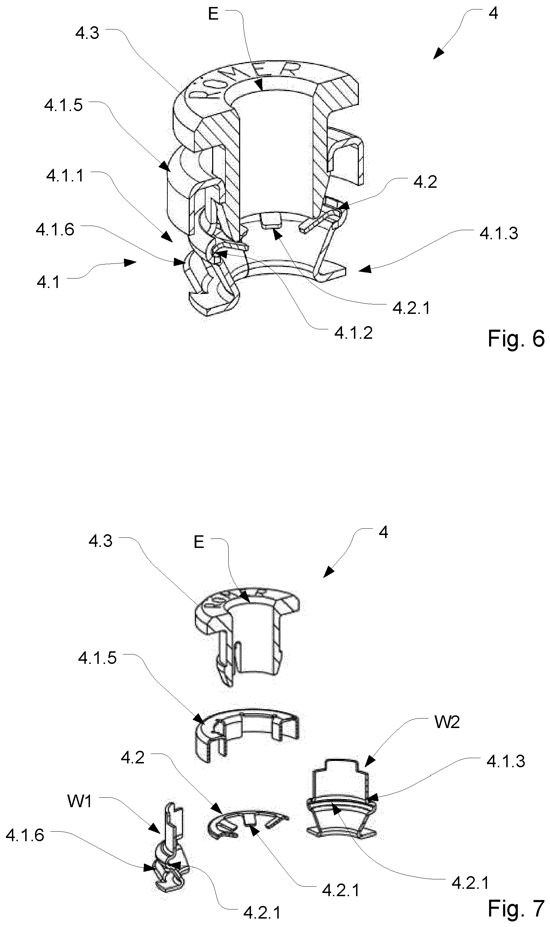

Fig. 6 und 7 zeigen eine zweite Ausführungsform eines Steckeinsatzes 4, der bei der Steckkupplung 1 Anwendung finden kann.

In dieser zweiten Ausführungsform ist der Steckeinsatz 4 gemäß der anmeldereigenen europäischen Patentanmeldung mit der Anmeldenummer 22176919.3 ausgebildet. Der Inhalt dieser Patentanmeldung wird vollumfänglich zum Gegenstand der vorliegenden Offenbarung gemacht.

Der Steckeinsatz 4 gemäß der zweiten Ausführungsform zeichnet sich dadurch aus, dass die Steckhülse 4.1 zumindest abschnittsweise mittels eines Stanz-Biege-Verfahrens aus einem metallischen Flachmaterial gebildet ist.

Die Steckhülse 4.1 weist einen Hülsenabschnitt 4.1.1 und einen Kragenabschnitt 4.1.5 auf. Der Hülsenabschnitt 4.1.1 bildet zumindest partiell die Wandung der Steckhülse 4.1 aus und umschließt umfangsseitig den Durchführkanal, in den das erste Kupplungselement 2 eingeschoben wird. Der Hülsenabschnitt 4.1.1 ist in einem ersten Bereich, der unmittelbar an das erste freie Ende des Steckeinsatzes 4 anschließt, in den das erste Kupplungselement 2 eingeschoben wird, beispielsweise rundrohrartig ausgebildet.

An diesen ersten Bereich schließt sich ein zweiter Bereich an, an dem durch Prägen des Flachmaterials innenumfangsseitig die Sicke 4.1.2 gebildet ist. In diese Sicke 4.1.2 ist das Fixierelement 4.2 mit dessen äußeren Rand aufgenommen und damit formschlüssig in dem Hülsenabschnitt 4.1.1 fixiert.

An den zweiten Bereich schießt sich in Einschubrichtung des ersten Kupplungselements 2 hin ein dritter Bereich an, in dem der Hülsenabschnitt 4.1.1 in Richtung zum zweiten freien Ende hin konisch zulaufend ausgebildet ist. In anderen Worten ist die Wandung des Hülsenabschnitts 4.1.1 im dritten Bereich trichterförmig zulaufend ausgebildet. Dadurch wird das eingeschobene erste Kupplungselement 2 zentriert.

Am zweiten freien Ende der Steckhülse 4.1 (freies Ende, das in Einschubrichtung des ersten Kupplungselements 2 weiter innen liegt) ist ein vierter Bereich des Hülsenabschnitts 4.1.1 vorgesehen, an dem ein Flansch 4.1.3 ausgebildet ist. Der Flansch 4.1.3 wird beispielsweise durch einen oder mehrere radial nach außen abstehende, eben ausgebildete Flachmaterialabschnitte gebildet. Der Flansch 4.1.3 kommt dabei in einer Ebene zu liegen, die senkrecht zur Einschubrichtung des ersten Kupplungselements 2 verläuft.

Der Flansch 4.1.3 kann kreisringförmig ausgebildet sein oder mehrere kreisringsegmentförmig ausgebildete Abschnitte aufweisen. Der Flansch 4.1.3 bildet eine Anlagefläche für das Dichtelement 5, das den Übergang zwischen dem ersten und zweiten Kupplungselement 2, 3 abdichtet. Damit kann das Dichtelement 5 durch den Steckeinsatz 4 in Position gehalten werden. Zudem kann der Flansch 4.1.3 in radialer Richtung eine Größe und Umfangsform aufweisen, die an die im zweiten Kupplungselement 3 gebildete Ausnehmung, in die der Steckeinsatz 4 eingesetzt wird, angepasst ist, und zwar derart, dass der Steckeinsatz 4 durch den Flansch 4.1.3 im zweiten Kupplungselement 3 zentriert wird.

Um den Steckeinsatz 4 in dem Kopplungsabschnitt 3.5 des zweiten Kupplungselements 3 zu fixieren, sind im Bereich des zweiten freien Endes Krallen 4.1.6 ausgebildet. Die Krallen 4.1.6 sind durch einstückig am Hülsenabschnitt 4.1.1 ausgebildete Laschen gebildet, die in Bezug auf die Einschubrichtung schräg nach oben abstehen und dazu ausgebildet sind, nach dem Einsetzen des Steckeinsatzes 4 in eine Ausnehmung des zweiten Kupplungselements 3 den Steckeinsatz 4 in dieser Ausnehmung zu verankern und damit ein unerwünschtes Herauslösen des Steckeinsatzes 4 aus dem zweiten Kupplungselement 3 zu verhindern. Die Krallen 4.1.6 können dabei in eine in der Ausnehmung des zweiten Kupplungselements 3 vorgesehene Nut eingreifen. Alternativ können die Krallen 4.1.6 dazu ausgebildet sein, eine Verankerung des Steckeinsatzes 1 in der glatten Wandung der Ausnehmung des zweiten Kupplungselements 3 (d.h. nutfreie Ausnehmung) zu bewirken.

Im gezeigten Ausführungsbeispiel sind am Flansch 4.1.3 des Steckeinsatzes 4 mehrere Krallen 4.1.6 umfangsseitig verteilt und beabstandet zueinander angeordnet. Je nach Durchmesser des Steckeinsatzes 4 können beispielsweise vier, sechs oder mehr Krallen 4.1.6 vorgesehen sein. Zwischen einem Paar von Krallen 4.1.6 ist vorzugsweise ein Flanschsegment des Flansches 4.1.3 vorgesehen. Dieses Flanschsegment kann vorzugsweise kreisringsegmentförmig ausgebildet sein. Durch die Flanschsegmente wird beispielsweise eine Zentrierung des Steckeinsatzes 4 im zweiten Kupplungselement 3 erreicht. Vorzugsweise bildet ein Fußbereich der Kralle 4.1.6 einen Anlagebereich für das Dichtelement 5 aus, so dass die Fußbereiche der Krallen 4.1.6 zusammen mit den Flanschsegmenten, die zwischen den Krallen 4.1.6 liegen, gemeinsam die Anlagefläche für das Dichtelement 5 bilden.

Der Hülsenabschnitt 4.1.1 ist mittels Stanz-Biege-Umformtechnik aus einem oder mehreren metallischen Flachmaterialstücken hergestellt. Das zumindest eine Flachmaterialstück wird dabei zunächst gestanzt. Anschließend wird eine Materialumformung vorgenommen, beispielsweise in dem die Sicke 4.1.2 durch einen Prägevorgang gebildet wird und/oder der Flansch 4.1.3 und die Krallen 4.1.6 durch Biegen hergestellt werden.

Im Falle eines einzigen Materialstücks, das den Hülsenabschnitt 5.1 bildet, wird dieses zuvor gestanzte und umgeformte Materialstück anschließend zu einem rohrartigen Körper zusammengebogen, so dass die Längsseiten des Materialstücks zueinander orientiert sind und vorzugsweise aneinander anliegen, so dass sich ein Stoß bildet. An dem Stoß kann eine zumindest partielle Verschweißung erfolgen.

Für den Fall, dass der Hülsenabschnitt 4.1.1 durch mehrere Materialstücke gebildet wird, wie dies in Fig. 7 gezeigt ist, werden die zuvor gestanzten und umgeformten Materialstücke anschließend jeweils zu einem schalenförmigen Wandungselement W1, W2 gebogen. Im Falle von zwei Wandungselementen W1, W2 sind diese halbschalenförmig ausgebildet. Diese können identisch oder auch unterschiedlich geformt sein, sind aber derart aufeinander abgestimmt ausgebildet, dass sich nach dem Zusammensetzen der schalenförmigen Wandungselemente W1, W2 ein umfangsseitig geschlossener oder im Wesentlichen geschlossener Hülsenabschnitt 4.1.1 bildet. Im Fall von mehr als zwei Wandungselementen bilden diese jeweils einen schalenförmigen Sektor, wobei durch Zusammensetzen von drei oder mehr dieser schalenförmigen Sektoren der Hülsenabschnitt 4.1.1 gebildet wird.

Nach dem Zusammensetzen der Wandungselemente W1, W2 kann eine zumindest partielle Verschweißung an den Stößen erfolgen. Vorzugsweise werden die Wandungselemente W1, W2 an den Stößen im Bereich des Flansches 4.1.3 geschweißt. Alternativ oder zusätzlich ist es auch möglich, dass die Wandungselemente W1, W2 formschlüssig zusammengehalten werden, beispielsweise mittels ineinandergreifender Schwalbenschwänze.

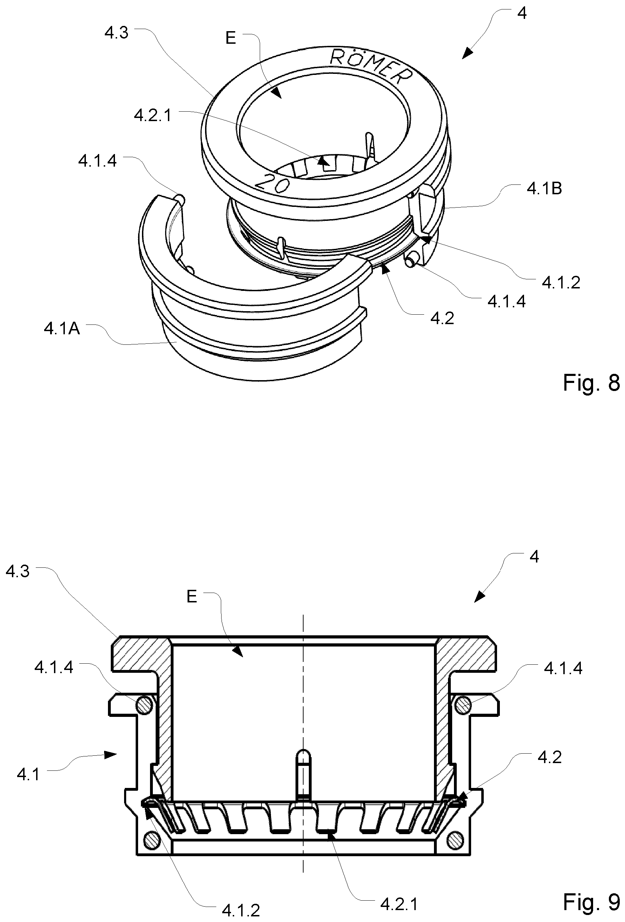

Fig. 8 und 9 zeigen eine dritte Ausführungsform eines Steckeinsatzes 4, der bei der Steckkupplung 1 Anwendung finden kann.

In dieser dritten Ausführungsform ist der Steckeinsatz 4 gemäß der anmeldereigenen europäischen Patentanmeldung mit der Anmeldenummer 23152142.8 ausgebildet. Der Inhalt dieser Patentanmeldung wird vollumfänglich zum Gegenstand der vorliegenden Offenbarung gemacht.

Der Steckeinsatz 4 gemäß der dritten Ausführungsform zeichnet sich dadurch aus, dass die Steckhülse 4.1 aus mehreren aus Kunststoff gefertigten Steckhülsenelementen 4.1A, 4.1B gebildet ist, die derart zusammensetzbar sind, dass diese eine im Querschnitt kreisringförmige Steckhülse 4.1 bilden.

Wie in den Figuren 8 und 9 ersichtlich, ist die Steckhülse 4.1 mehrteilig ausgebildet, und zwar aus mindestens zwei Steckhülsenelementen W1, W2 zusammengesetzt. Die Steckhülse 4.1 ist damit in Umfangsrichtung gesehen segmentiert ausgebildet. Die gezeigte Ausführungsform weist ein erstes und ein zweites Steckhülsenelement 4.1A, 4.1B auf. Vorzugsweise sind die Steckhülsenelemente 4.1A, 4.1B halbschalenförmig oder im Wesentlichen halbschalenförmig ausgebildet. Insbesondere können die Steckhülsenelemente 4.1A, 4.1B identische Teile sein, was die Fertigung der Steckhülse 4.1 bzw. das Zusammensetzen des Steckeinsatzes 4 vereinfacht. Die Steckhülsenelemente 4.1A, 4.1B lassen sich derart zusammensetzen, dass im zusammengesetzten Zustand eine umfangsseitig geschlossene Steckhülse 4.1 gebildet wird.

Die Steckhülsenelemente 4.1A, 4.1B weisen vorzugsweise Verbindungsmittel 4.1.4 auf, die dazu ausgebildet sind, die Steckhülsenelemente 4.1A, 4.1B nach deren Zusammensetzen gegeneinander derart zu fixieren, dass ein unerwünschtes Auseinanderfallen der entstehenden Steckhülse 4.1 vermieden wird. Die Verbindungsmittel 4.1.4 können beispielsweise durch eine Steck- oder Rastverbindung gebildet sein, die die Steckhülsenelemente 4.1, 4.2 nach dem Zusammensetzen in deren Relativlage zueinander sichert. Die Verbindungsmittel 4.1.4 können insbesondere an den Fügeflächen der Steckhülsenelemente 4.1A, 4.1B vorgesehen sein.

Im gezeigten Ausführungsbeispiel sind die Verbindungsmittel 4.1.4 durch Zapfenverbindungen gebildet. Jeweils zumindest eine Zapfenverbindung ist an den Fügestellen der Steckhülse 4.1 vorgesehen. Eine Zapfenverbindung wird jeweils durch eine Ausnehmung und einen Zapfen gebildet. Im gezeigten Ausführungsbeispiel weisen die Steckhülsenelemente 4.1A, 4.1B an einer ersten Fügefläche ein Paar von Zapfen und an einer zweiten, diametral gegenüberliegenden Fügefläche mit den Zapfen korrespondierende Ausnehmungen auf.

Die Dimensionierung der Ausnehmungen und der Zapfen ist derart gewählt, dass die Zapfen passgenau aber klemmend in die Ausnehmungen einschiebbar sind. Die Dimensionierung der Ausnehmungen und der Zapfen kann insbesondere derart gewählt sein, dass das Zusammensetzen der Steckhülsenelemente werkzeugfrei erfolgen kann. Die Passung der Ausnehmungen und der Zapfen verhindert jedoch ein unerwünschtes Lösen der Verbindung der Steckhülsenelemente 4.1A, 4.1B.

Die Segmentierung der Steckhülse 4.1 in Umfangsrichtung ermöglicht es, dass zunächst in ein erstes Steckhülsenelement 4.1A das Fixierelement 4.2 eingesetzt werden kann und anschließend erst das zumindest eine weitere Steckhülsenelement 4.1B aufgesetzt und mit dem ersten Steckhülsenelement 4.1A verbunden wird. Das Löseorgan 4.3 kann entweder ebenfalls vor dem Zusammensetzen der Steckhülsenelemente 4.1A, 4.1B eingebracht werden oder erst nach deren Zusammensetzen in die Steckhülse 4.1 eingedrückt werden.

Die Steckhülse 4.1 weist vorzugsweise an dem freien Ende, an dem die Öffnung zum Einschieben des ersten Kupplungselements 2 vorgesehen ist, einen in radialer Richtung verbreiterten Randabschnitt auf. Dieser Randabschnitt überspannt nach dem Einsetzen des Steckeinsatzes 4 in das zweite Kupplungselement 3 den Rand der Öffnung des zweiten Kupplungselements 3. An das freie Ende schließt sich ein Führungsabschnitt an, der eine Gleitführung für das Löseorgan 4.3 bildet. Durch diesen Führungsabschnitt wird das Löseorgan 4.3 verkantungsfrei axial geführt (axial in Bezug auf die Einschieberichtung des zweiten Kupplungselements 2).

An den Führungsabschnitt in Einschieberichtung anschließend ist eine Hinterschneidung mit einer Kante gebildet. Mit dieser Hinterschneidung wirkt ein Rastabschnitt des Löseorgans 4.3 zusammen. Insbesondere bildet die Hinterschneidung eine Anlagefläche für den Rastabschnitt des Löseorgans 4.3, so dass ein Herausschieben des Löseorgans 4.3 entgegen der Einschieberichtung des ersten Kupplungselements 2 verhindert wird.

An die Hinterschneidung schließt sich in Einschieberichtung des ersten Kupplungselements 2 eine Sicke 4.1.2 an. Die Sicke 4.1.2 nimmt den Randabschnitt des Fixierelements 4.2 formschlüssig auf, so dass das Fixierelement 4.2 nach dem Zusammensetzen der Steckhülsenelemente 4.1A, 4.1B fixiert ist.

Die Steckhülse 4 weist vorzugsweise an die Sicke 4.1.2 in Einschieberichtung anschließend einen konisch zulaufenden Bereich auf. Dadurch wird zum einen ein Aufnahmeraum für die vom Fixierelement 4.2 abstehenden Krallen 4.2.1 und ein Freiraum zum Aufbiegen der Krallen 4.2.1 zum Lösen des Eingriffs der Krallen 4.2.1 in die Wandung des ersten Kupplungselements 2 gebildet Außerdem wird durch den konisch zulaufenden Bereich erreicht, dass am freien Ende der Steckhülse 4.1 eine verbreiterte Anlagefläche für das Dichtelement 5 geschaffen wird. Durch diese Anlagefläche wird das Dichtelement 5 in seiner Lage zwischen dem Steckeinsatz 4 und dem zweiten Kupplungselement 3 fixiert.

Die Steckhülse 4.1 kann entweder rastend in dem zweiten Kupplungselement 3 gehalten sein oder aber derart ausgebildet sein, dass der Steckeinsatz 4 nach einem Einpressen kraftschlüssig im Kopplungsabschnitt 3.5 gehalten wird.

Die Erfindung wurde voranstehend an Ausführungsbeispielen beschrieben. Es versteht sich, dass zahlreiche Änderungen sowie Abwandlungen möglich sind, ohne dass dadurch der durch die Patentansprüche definierte Schutzbereich verlassen wird.

### Bezugszeichenliste

- 1: Steckkupplung
- 2: erstes Kupplungselement
- 2.1: erster Ventilkörper
- 2.1.1: Stirnabschnitt
- 2.1.2: Dichtelement
- 2.2: erstes Kupplungselementgehäuse
- 2.2.1: Fluidkanal
- 2.3: Dichtsitz
- 2.4: Feder
- 3: zweites Kupplungselement
- 3.1: zweiter Ventilkörper
- 3.1.1: Stirnabschnitt
- 3.1.2: Dichtelement
- 3.2: zweites Kupplungselementgehäuse
- 3.2.1: Fluidkanal
- 3.3: Dichtsitz
- 3.4: Feder
- 3.5: Kopplungsabschnitt
- 4: Steckeinsatz
- 4.1: Steckhülse
- 4.1.1: Hülsenabschnitt
- 4.1.2: Sicke
- 4.1.3: Flansch
- 4.1.4: Verbindungsmittel
- 4.1.5: Kragenabschnitt
- 4.1.6: Krallen
- 4.1A: Steckhülsenelement
- 4.1B: Steckhülsenelement
- 4.2: Fixierelement
- 4.3: Löseorgan
- 4.2.1: Krallen
- 5: Dichtelement

- E: Einschuböffnung
- W1: Wandungselement
- W2: Wandungselement

## Patentansprüche

1. Steckkupplung umfassend ein erstes Kupplungselement (2) als männliches Kupplungselement und ein zweites Kupplungselement (3) als weibliches Kupplungselement, wobei das erste Kupplungselement (2) einen ersten Ventilkörper (2.1) und ein erstes Kupplungselementgehäuse (2.2) aufweist, wobei der erste Ventilkörper (2.1) federbelastet verschiebbar im ersten Kupplungselementgehäuse (2.2) angeordnet ist und im entkoppelten Zustand der Steckkupplung (1) aufgrund der Federbelastung gegenüber einem im ersten Kupplungselementgehäuse (2.2) vorgesehenen Dichtsitz anliegt, wobei das zweite Kupplungselement (3) ein zweites Kupplungselementgehäuse (3.2) mit einer Öffnung aufweist, in die das erste Kupplungselement (2) teilweise einsteckbar ist, wobei die Öffnung des zweiten Kupplungselements (3) einen Steckeinsatz (4) zur lösbaren Fixierung des ersten Kupplungselements (2) im zweiten Kupplungselementgehäuse (3.2) aufweist, wobei der Steckeinsatz (4) eine Steckhülse (4.1), ein Fixierelement (4.2) und ein Löseorgan (4.3) mit einer Einführöffnung umfasst, wobei das Fixierelement (4.2) zur lösbaren Fixierung des in die Einführöffnung eingeschobenen ersten Kupplungselements (2) in dem Steckeinsatz (4) ausgebildet ist und das Löseorgan (4.3) mit dem Fixierelement (4.2) derart zusammenwirkt, dass durch eine axiale Verschiebung des Löseorgans (4.3) relativ zur Steckhülse (4.1) die Fixierung des ersten Kupplungselements (2) gelöst wird, **dadurch gekennzeichnet, dass** das zweite Kupplungselementgehäuse (3.2) zumindest eine weitere Öffnung aufweist, in der ein weiterer Steckeinsatz (4) zur Fixierung eines weiteren ersten Kupplungselements (2) als männliches Kupplungselement vorgesehen ist, wobei der weitere Steckeinsatz (4) eine Steckhülse (4.1), ein Fixierelement (4.2) und ein Löseorgan (4.3) mit einer Einführöffnung umfasst, wobei das Fixierelement (4.2) zur lösbaren Fixierung des weiteren ersten Kupplungselements (2) in dem weiteren Steckeinsatz (4) ausgebildet ist und das Löseorgan (4.3) mit dem Fixierelement (4.2) derart zusammenwirkt, dass durch eine axiale Verschiebung des Löseorgans (4.3) relativ zur Steckhülse (4.1) die Fixierung des weiteren ersten Kupplungselements (2) gelöst wird und wobei die Ventilkörper (2.1) der männlichen Kupplungselemente (2) beim Koppeln der Steckkupplung (1) derart miteinander zusammenwirken, dass diese von ihrem Dichtsitz (2.3) abgehoben werden und dadurch der Fluidkanal durch die Steckkupplung (1) freigegeben wird.

2. Steckkupplung nach einem der vorhergehenden Ansprüche, **dadurch gekennzeichnet, dass** das Löseorgan (4.3) in dem Steckeinsatz parallel zur Einsteckrichtung des ersten Kupplungselements (2) verschiebbar ist.

3. Steckkupplung nach einem der vorhergehenden Ansprüche, **dadurch gekennzeichnet, dass** in der Öffnung des zweiten Kupplungselements (3) ein Dichtelement (5) vorgesehen ist, das durch den Steckeinsatz (4) fixiert ist, wobei das Dichtelement (5) zur Abdichtung des Übergangs zwischen dem ersten und zweiten Kupplungselement (2, 3) durch außenumfangsseitiges Umschließen des ersten Kupplungselements (2) ausgebildet ist.

4. Steckkupplung nach einem der vorhergehenden Ansprüche, **dadurch gekennzeichnet, dass** das Fixierelement (4.2) ein scheibenförmiger Krallenring ist, der innenumfangsseitig eine Vielzahl von reversibel verbiegbaren Krallen zur Fixierung des ersten Kupplungselements (2) aufweist.

5. Steckkupplung nach einem der vorhergehenden Ansprüche, **dadurch gekennzeichnet, dass** die Steckhülse (4.1) einen Hülsenabschnitt (4.1.1) umfasst, der aus zumindest einem Wandungselement (W1, W2) gebildet ist, wobei das Wandungselement (W1, W2) durch Stanzen und Biegen eines metallischen Flachmaterialabschnitts zu einem schalenartigen oder umfangsseitig geschlossenen Element gebildet ist und wobei das Fixierelement (4.2) von dem Hülsenabschnitt (4.1.1) umschlossen und formschlüssig in dem Hülsenabschnitt (4.1.1) fixiert ist.

6. Steckkupplung nach Anspruch 5, **dadurch gekennzeichnet, dass** das Fixierelement (4.2) randseitig in einer Sicke (4.1.2) des Hülsenabschnitts (4.1.1) der Steckhülse (4.1) fixiert ist oder mittels eines Schnappmechanismus durch axiales Eindrücken in der Steckhülse (4.1) gehalten ist.

7. Steckkupplung nach einem der Ansprüche 5 oder 6, **dadurch gekennzeichnet, dass** der Hülsenabschnitt (4.1.1) zwischen einem Mittenbereich, in dem das Fixierelement (4.2) gehalten ist, und einem dem Löseorgan (4.3) gegenüberliegenden zweiten freien Ende der Steckhülse (4.1) trichterförmig zulaufend ausgebildet ist.

8. Steckkupplung nach einem der Ansprüche 5 bis 7, **dadurch gekennzeichnet, dass** der Hülsenabschnitt (4.1.1) an einem der Einschuböffnung gegenüberliegenden zweiten freien Ende der Steckhülse (4.1) einen Flansch (4.1.3) zur Ausbildung einer Anlagefläche für das Dichtelement (5) aufweist.

9. Steckkupplung nach einem der Ansprüche 5 bis 8, **dadurch gekennzeichnet, dass** der Hülsenabschnitt (4.1.1) an einem dem Löseorgan (4.3) gegenüberliegenden zweiten freien Ende einen Flansch (4.1.3) aufweist, an dem umfangsseitig verteilt mehrere Krallen (4.1.6) zur Fixierung der Steckhülse (4.1) in dem zweiten Kupplungselementgehäuse (3.2) vorgesehen sind.

10. Steckkupplung nach einem der Ansprüche 1 bis 4, **dadurch gekennzeichnet, dass** die Steckhülse (4.1) aus zumindest zwei in Umfangsrichtung aneinander anschließenden Steckhülsenelementen (4.1A, 4.1B) gebildet und durch die aneinander anschließenden Steckhülsenelemente (4.1A, 4.1B) zu einer geschlossenen, im Querschnitt kreisringförmigen Steckhülse (4.1) zusammensetzbar ist, wobei die Steckhülsenelemente (4.1A, 4.1B) aus Kunststoff gebildet sind, und wobei die Steckhülse (4.1) in deren Innenraum eine Sicke (4.1.2) aufweist, in der das Fixierelement (4.2) im zusammengesetzten Zustand der Steckhülse (4.1) formschlüssig fixiert ist.

11. Steckkupplung nach Anspruch 10, **dadurch gekennzeichnet, dass** die Steckhülsenelemente (4.1A, 4.1B) durch Verbindungsmittel (4.1.4) im zusammengesetzten Zustand derart relativ zueinander fixierbar sind, dass diese im Zusammenwirken miteinander die umfangsseitig geschlossene Steckhülse (4.1) bilden.

12. Steckkupplung nach Anspruch 11, **dadurch gekennzeichnet, dass** die Verbindungsmittel (4.1.4) zumindest eine Zapfenverbindung und/oder zumindest eine Rastverbindung umfassen.

13. Steckkupplung nach einem der Ansprüche 10 bis 12, **dadurch gekennzeichnet, dass** die Steckhülse (4.1) in Umfangsrichtung segmentiert und in axialer Richtung nicht segmentiert ist.

## Claims

1. Plug-in coupling comprising a first coupling element (2) as a male coupling element and a second coupling element (3) as a female coupling element, the first coupling element (2) having a first valve body (2.1) and a first coupling element housing (2.2), the first valve body (2.1) being arranged in the first coupling element housing (2.2) so as to be movable in a spring-loaded fashion and, in the decoupled state of the plug-in coupling (1), bears due to the spring load against a sealing seat provided in the first coupling element housing (2.2), the second coupling element (3) having a second coupling element housing (3.2) with an opening into which the first coupling element (2) can be partially inserted, the opening of the second coupling element (3) having a plug insert (4) for releasably fixing the first coupling element (2) in the second coupling element housing (3.2), the plug insert (4) comprising a plug sleeve (4.1), a fixing element (4.2) and a release member (4.3) with an insertion opening, the fixing element (4.2) being designed for the releasable fixing of the first coupling element (2) inserted into the insertion opening in the plug insert (4) and the release member (4.3) cooperating with the fixing element (4.2) in such a way that an axial movement of the release member (4.3) relative to the plug sleeve (4.1) releases the fixing of the first coupling element (2), **characterized in that** the second coupling element housing (3.2) has at least one further opening in which a further plug insert (4) is provided for the fixing of a further first coupling element (2) as a male coupling element, the further plug insert (4) comprising a plug sleeve (4.1), a fixing element (4.2) and a release member (4.3) with an insertion opening, the fixing element (4.2) being designed for the releasable fixing of the further first coupling element (2) in the further plug insert (4) and the release member (4.3) cooperating with the fixing element (4.2) in such a way that an axial movement of the release member (4.3) relative to the plug sleeve (4.1) releases the fixing of the further first coupling element (2), and, when coupling the plug-in coupling (1), the valve bodies (2.1) of the male coupling elements (2) interact with one another in such a way that they are lifted from their sealing seat (2.3), thus enabling the fluid channel through the plug-in coupling (1).

2. Plug-in coupling according to any one of the preceding claims, **characterized in that** the release member (4.3) in the plug insert is movable parallel to the plug-in direction of the first coupling element (2).

3. Plug-in coupling according to any one of the preceding claims, **characterized in that** a sealing element (5) is provided in the opening of the second coupling element (3) which is fixed by the plug insert (4), the sealing element (5) being designed to seal the transition between the first and second coupling elements (2, 3) by surrounding the first coupling element (2) on the outer circumferential side.

4. Plug-in coupling according to any one of the preceding claims, **characterized in that** the fixing element (4.2) is a disk-shaped claw ring which has a plurality of reversibly bendable claws on the inner circumferential side for fixing the first coupling element (2).

5. Plug-in coupling according to any one of the preceding claims, **characterized in that** the plug sleeve (4.1) comprises a sleeve portion (4.1.1) which is formed from at least one wall element (W1, W2), the wall element (W1, W2) being formed by punching and bending a metallic flat material portion into an element which is shell-like or closed on the circumferential side, and the fixing element (4.2) being enclosed by the sleeve portion (4.1.1) and fixed in an interlocking manner in the sleeve portion (4.1.1).

6. Plug-in coupling according to claim 5, **characterized in that** the fixing element (4.2) is fixed at the edge in a bead (4.1.2) of the sleeve portion (4.1.1) of the plug sleeve (4.1) or is held in the plug sleeve (4.1) by means of a snap mechanism using axial pressing.

7. Plug-in coupling according to any one of claims 5 or 6, **characterized in that** the sleeve portion (4.1.1) is formed between a central region in which the fixing element (4.2) is held and a second free end of the plug sleeve (4.1) that is located opposite to the release member (4.3) so as to taper in a funnel-shaped fashion.

8. Plug-in coupling according to any one of claims 5 to 7, **characterized in that** the sleeve portion (4.1.1) has a flange (4.1.3) at a second free end of the plug sleeve (4.1) that is located opposite to the insertion opening in order to form a contact surface for the sealing element (5).

9. Plug-in coupling according to any one of claims 5 to 8, **characterized in that** the sleeve portion (4.1.1) has a flange (4.1.3) at a second free end opposite to the release member (4.3), which is provided with a plurality of claws (4.1.6) in a circumferentially distributed fashion in order to fix the plug sleeve (4.1) in the second coupling element housing (3.2).

10. Plug-in coupling according to any one of claims 1 to 4, **characterized in that** the plug sleeve (4.1) is formed from at least two plug sleeve elements (4.1A, 4.1B) adjoining one another in the circumferential direction and can be assembled by the adjoining plug sleeve elements (4.1A, 4.1B) to form a closed plug sleeve (4.1) which is circular in cross-section, the plug sleeve elements (4.1A, 4.1B) being made of a plastic material, and the plug sleeve (4.1) having in its interior space a bead (4.1.2) in which the fixing element (4.2) is fixed in an interlocking manner in the assembled state of the plug sleeve (4.1).

11. Plug-in coupling according to claim 10, **characterized in that** the plug sleeve elements (4.1A, 4.1B) can be fixed relative to one another by connecting devices (4.1.4) in the assembled state in such a way that they form the circumferentially closed plug sleeve (4.1) when acting together.

12. Plug-in coupling according to claim 11, **characterized in that** the connecting devices (4.1.4) comprise at least one pin connection and/or at least one snap-in connection.

13. Plug-in coupling according to any one of claims 10 to 12, **characterized in that** the plug sleeve (4.1) is segmented in the circumferential direction and not segmented in the axial direction.

## Revendications

1. Raccord enfichable comprenant un premier élément d'accouplement (2) servant d'élément d'accouplement mâle et un deuxième élément d'accouplement (3) servant d'élément d'accouplement femelle,
dans lequel le premier élément d'accouplement (2) comprend un premier corps de soupape (2.1) et un premier boîtier d'élément d'accouplement (2.2), le premier corps de soupape (2.1) est disposé dans le premier boîtier d'élément d'accouplement (2.2) de manière à pouvoir coulisser sous l'effet d'un ressort et, à l'état désaccouplé du raccord enfichable (1), s'appuie sous l'effet du ressort contre un siège d'étanchéité prévu dans le premier boîtier d'élément d'accouplement (2.2),
le deuxième élément d'accouplement (3) comprend un deuxième boîtier d'élément d'accouplement (3.2) muni d'une ouverture dans laquelle le premier élément d'accouplement (2) peut être partiellement enfiché,
l'ouverture du deuxième élément d'accouplement (3) comprend un insert d'enfichage (4) pour la fixation amovible du premier élément d'accouplement (2) dans le deuxième boîtier d'élément d'accouplement (3.2),
l'insert d'enfichage (4) comprend une douille d'enfichage (4.1), un élément de fixation (4.2) et un organe de libération (4.3) muni d'une ouverture d'insertion,
l'élément de fixation (4.2) est conçu pour la fixation amovible du premier élément d'accouplement (2), inséré dans l'ouverture d'insertion, dans l'insert d'enfichage (4) et l'organe de libération (4.3) coopère avec l'élément de fixation (4.2) de telle sorte que la fixation du premier élément d'accouplement (2) est libérée par un déplacement axial de l'organe de libération (4.3) par rapport à la douille d'enfichage (4.1),
**caractérisé en ce que** le deuxième boîtier d'élément d'accouplement (3.2) présente au moins une autre ouverture dans laquelle est prévu un autre insert d'enfichage (4) pour la fixation d'un autre premier élément d'accouplement (2) en tant qu'élément d'accouplement mâle, l'autre insert d'enfichage (4) comprenant une douille d'enfichage (4.1), un élément de fixation (4.2) et un organe de libération (4.3) muni d'une ouverture d'insertion, l'élément de fixation (4.2) étant conçu pour la fixation amovible de l'autre premier élément d'accouplement (2) dans l'autre insert d'enfichage (4) et l'organe de libération (4.3) coopérant avec l'élément de fixation (4.2) de telle sorte que la fixation de l'autre premier élément d'accouplement (2) est libérée par un déplacement axial de l'organe de libération (4.3) par rapport à la douille d'enfichage (4.1), et les corps de soupape (2.1) des éléments d'accouplement mâles (2) coopérant entre eux lors de l'accouplement du raccord enfichable (1) de telle sorte qu'ils sont soulevés de leur siège d'étanchéité (2.3) et que le canal de fluide à travers le raccord enfichable (1) est ainsi ouvert.

2. Raccord enfichable selon la revendication précédente,
**caractérisé en ce que** l'organe de libération (4.3) dans l'insert d'enfichage peut être déplacé parallèlement à la direction d'enfichage du premier élément d'accouplement (2).

3. Raccord enfichable selon l'une des revendications précédentes,
**caractérisé en ce qu'**un élément d'étanchéité (5) est prévu dans l'ouverture du deuxième élément d'accouplement (3), lequel est fixé par l'insert d'enfichage (4), l'élément d'étanchéité (5) étant conçu pour assurer l'étanchéité de la transition entre les premier et deuxième éléments d'accouplement (2, 3) en entourant le premier élément d'accouplement (2) sur son pourtour extérieur.

4. Raccord enfichable selon l'une des revendications précédentes,
**caractérisé en ce que** l'élément de fixation (4.2) est une bague à griffes en forme de rondelle qui présente, du côté de son pourtour intérieur, une pluralité de griffes flexibles de manière réversible pour la fixation du premier élément d'accouplement (2).

5. Raccord enfichable selon l'une des revendications précédentes,
**caractérisé en ce que** la douille d'enfichage (4.1) comprend une partie de douille (4.1.1) formée d'au moins un élément de paroi (W1, W2), l'élément de paroi (W1, W2) étant formé par estampage et pliage d'une portion de matériau métallique plat pour donner un élément en forme de coque ou fermé sur le pourtour, et l'élément de fixation (4.2) étant entouré par la partie de douille (4.1.1) et étant fixé par complémentarité de forme dans la partie de douille (4.1.1).

6. Raccord enfichable selon la revendication 5,
**caractérisé en ce que** l'élément de fixation (4.2) est fixé sur le bord dans une moulure (4.1.2) de la partie de douille (4.1.1) de la douille d'enfichage (4.1) ou est maintenu dans la douille d'enfichage (4.1) au moyen d'un mécanisme à encliquetage, par enfoncement axial.

7. Raccord enfichable selon l'une des revendications 5 ou 6,
**caractérisé en ce que** la partie de douille (4.1.1) est conçue de manière à converger en forme d'entonnoir entre une zone centrale, dans laquelle l'élément de fixation (4.2) est maintenu, et une deuxième extrémité libre de la douille d'enfichage (4.1), opposée à l'organe de libération (4.3).

8. Raccord enfichable selon l'une des revendications 5 à 7,
**caractérisé en ce que** la partie de couille (4.1.1) présente, à une deuxième extrémité libre de la douille d'enfichage (4.1) opposée à l'ouverture d'insertion, une bride (4.1.3) pour former une surface d'appui pour l'élément d'étanchéité (5).

9. Raccord enfichable selon l'une des revendications 5 à 8,
**caractérisé en ce que** la partie de douille (4.1.1) présente, à une deuxième extrémité libre opposée à l'organe de libération (4.3), une bride (4.1.3) sur laquelle sont prévues plusieurs griffes (4.1.6), réparties sur le pourtour, pour la fixation de la douille d'enfichage (4.1) dans le deuxième boîtier d'élément d'accouplement (3.2).

10. Raccord enfichable selon l'une des revendications 1 à 4,
**caractérisé en ce que** la douille d'enfichage (4.1) est formée d'au moins deux éléments de douille d'enfichage (4.1A, 4.1B), se raccordant l'un à l'autre en direction périphérique, et peut être assemblée par les éléments de douille d'enfichage (4.1A, 4.1B), se raccordant l'un à l'autre, pour former une douille d'enfichage (4.1) fermée de section transversale en forme d'anneau circulaire, les éléments de douille d'enfichage (4.1A, 4.1B) étant en matière plastique, et la douille d'enfichage (4.1) présentant dans son espace intérieur une moulure (4.1.2) dans laquelle l'élément de fixation (4.2) est fixé par complémentarité de forme à l'état assemblé de la douille d'enfichage (4.1).

11. Raccord enfichable selon la revendication 10,
**caractérisé en ce que** les éléments de douille d'enfichage (4.1A, 4.1B) peuvent être fixés l'un par rapport à l'autre à l'état assemblé à l'aide de moyens de liaison (4.1.4) de manière à former ensemble, en coopération, la douille d'enfichage (4.1) fermée sur son pourtour.

12. Raccord enfichable selon la revendication 11,
**caractérisé en ce que** les moyens de liaison (4.1.4) comprennent au moins une liaison à tenon et mortaise et/ou au moins une liaison à encliquetage.

13. Raccord enfichable selon l'une des revendications 10 à 12,
**caractérisé en ce que** la douille d'enfichage (4.1) est segmentée en direction périphérique et non segmentée en direction axiale.
